# EUROPEAN PATENT SPECIFICATION

(11) **EP 1 248 414 B1**
(45) Date of publication and mention of the grant of the patent: **13.08.2008**
(21) Application number: 02252088.6
(22) Date of filing: 22.03.2002
(51) Int. Cl.: H04L 12/28, G07F 7/00

(54) **System and method for conducting wireless transactions**
System und Verfahren zum Durchführen von drahtlosen Transaktionen
Système et méthode pour exécuter des transactions sans fil

(30) Priority: 28.03.2001 US 818616
(43) Date of publication of application: 09.10.2002
(73) Proprietor: Lucent Technologies Inc., Murray Hill, New Jersey 07974-0636 (US)
(72) Inventor: August, Katherine G., Matawan, New Jersey 07747 (US); Sizer, Theodore, II, Little Silver, New Jersey 07739 (US)
(74) Representative: Sarup, David Alexander

## Description

### FIELD OF THE INVENTION

The present invention relates to customer/vendor transactions which occur at vendor transaction facilities, for example, at a drive-through restaurant..

### BACKGROUND OF THE INVENTION

It is estimated that 60% of all business for fast food chains takes place at a drive-through window. The most significant problems encountered in adequately managing that portion of the business include conducting the cash portion of the transaction due to the overlap of walk-in, as well as drive-through, customers; and communication between the customers and fast food chain employees through microphone speakers, etc., in a noisy environment which might include traffic and car noise. Such noise significantly degrades the quality and understandability of the speech transfer between the customer and employee. In addition, menus at such drive-through windows are often static and not easily changed. Cash is also the primary form of payment and the cash transaction slows throughput of the food delivery process.

What is needed is a more efficient process for conducting customer/vendor transactions, for example, those which occur at drive-through or other vendor transaction facilities.

EP-A-0 865 006 discloses a quick-stop mass retail system for ordering and purchasing articles from a remote location for pickup at an article pickup area at an automated store, comprising an interactive system for communicating a customer's purchase order for at least one article; a host computer adapted for receiving the customer's purchase order, processing the customer's purchase order, and storing the customer's purchase order in a database; a system for rapidly retrieving the article ordered by the customer from a storage location for the article at the automated store in response to customer purchase order information received from the host computer; and a system for retrieving identification information from the customer and communicating the same to the host computer; whereby the host computer enables the system for retrieving the article to provide the article to the article pickup area upon obtaining the identification information and comparing the identification information with the stored information in the customer's purchase order.

### SUMMARY OF THE INVENTION

According to one aspect of this invention there is provided a wireless apparatus as claimed in claim 1.

The apparatus may comprise a display device, said control circuit causing said display device to indicate the status of orders placed by customers communicating with said transceiver. Said control circuit may arrange customer orders in a queue and operate said display device to display the queue of customer orders. Said customer orders may be arranged in a first-in first out queue, or in a queue based on customer distance from a fulfillment station, or in a queue based on time to fulfillment, or in a queue based on customer priority.

Said wireless communication link may be a Bluetooth™ compliant communications link.

Said control circuit may cause said transceiver to transmit menu items to a wireless customer.

Said control circuit may cause said transceiver to transmit promotional specials to a wireless customer.

Said menu items may be transmitted upon the establishment of a communications link with a customer. Said menu items may be transmitted until a customer completes an order.

Said promotional specials may be transmitted upon the establishment of a communications link with a customer. Said promotional specials may be transmitted until a customer completes an order.

The apparatus may comprise a speech recognition unit for receiving speech orders from a customer and converting them to processable information, said control circuit being coupled to said speech recognition unit to receive and process said processable information.

The apparatus may comprise a speech synthesis unit, said control circuit operating said speech synthesis unit to provide speech information associated with customer orders which is transmitted by said transeiver to a customer.

Said control circuit may convert said processable information into a customer order of an ordering system. The apparatus may comprise a display device, said control circuit causing said display device to display the entry of a customer order into said ordering system.

The apparatus may comprise an agent station coupled to said control circuit for monitoring an order received from a customer. Said agent station may comprise display device for displaying the status of a customer order. Said agent station may include an audio circuit which allows for audio communication with a selected customer.

The apparatus may comprise an agent station coupled to said control circuit for adjusting an order received from a customer. Said agent station may be provided at a vendor transaction facility which contains said transceiver, or at a vendor transaction facility which does not contain said transceiver.

Said control circuit may compute a monetary total for an entered order and causes said transceiver to transmit said monetary total to a customer. Said monetary total may be transmitted as a displayable amount, or as an audible amount.

Said control circuit may process payment information received through said transceiver. Said payment information may comprise a credit card information, debit card information, prepaid account information, or information for billing a pre-existing customer account. Said customer account may be a wireless service account. Said payment information may include information authorizing a charge to a customer account and a customer verification code for verification of the authorization. Said payment information may comprise a customer network account, or a customer telephone account.

Said control circuit may cause said transceiver to establish a communications link with a customer within a predetermined distance of a predetermined location.

Said control circuit may determine from customer transmissions an identity of said customer.

Said control circuit may cause said transceiver to transmit order status information to a customer.

Said agent station may display a plurality of received and pending customer orders. Said agent station may include an entry device for selecting a displayed customer order for action. Said action may include the transmission of a message from said agent through said transceiver to a customer.

Said control circuit may operate said transceiver to send an audio message to a customer, or to send a display message to a customer.

Said control circuit may receive a customer identification transmission from said transceiver, and operate said transceiver to transmit a customer favorites list to said customer.

Said control circuit may receive a customer identification transmission from said transceiver and provide said customer identification information to a customer priority database.

Said control circuit may receive a customer identification transmission from said transceiver and provides said customer identification information to a customer loyalty database.

Said control circuit may be operative to establish a secure financial transaction link for processing a received customer transaction amount authorization.

Said order may be an order for goods, or an order for services.

Said control circuit may be a distributed processing control circuit which comprises at least two processing units, each processing an aspect of said order.

Said control circuit may be operative to cause the transmission of directions to said fulfillment station to a customer. Said control circuit may cause said transmission of directions in response for a request for directions received from a customer.

Said transceiver may include a plurality of communications channels which enable said transceiver and control circuit to simultaneously communicate with a plurality of customers. The apparatus may comprise a display device, said control circuit operating said display device to simultaneously display a plurality of pending customer orders. Said control circuit may arrange said plurality of pending customer orders in a queue and display said queued orders on said displayed device.

The apparatus may comprise a display device, said control circuit causing said display device to simultaneously display the locations of customers communicating with said apparatus.

Said fulfillment station may be a drive-through window.

According to another aspect of this invention there is provided a personal wireless communications apparatus for wirelessly placing a customer order, said communications apparatus comprising:
a display device for displaying order information;
an input device for entering order information;
a wireless transceiver for transmitting and receiving order information when said apparatus is within wireless communications range of a vendor facility; and
a control circuit for operating said transceiver to establish a temporary wireless communications link with a vendor within said communications range and for exchanging order information with said vendor, said control circuit operating said display device to display customer order information.

Said control circuit may store information regarding available vendors in defined areas, said control circuit being responsive to an input indicating a location of said apparatus to display on said display device those vendors which are in an area where said apparatus is located. The apparatus may comprise a positioning indication system for providing location information of said apparatus to said control unit.

Said control circuit may be responsive to an input at said input device to display on said display device a list of types of services for a customer to choose from.

Said control circuit may be responsive to an input at said input device to display on said display device a list of types of products for a customer to choose from.

Said control circuit may be responsive to a user selection at said input device of a type of service to further display on said display device those vendors which are proximate to said apparatus which provide said selected services.

Said control circuit may be responsive to a user selection at said input device of a type of product to further display on said display device those vendors which are proximate to said apparatus which provide said selected products.

Said control circuit may be responsive to a user selection of a vendor which provides said selected service to operate said transceiver to initiate a wireless communication with said selected vendor.

Said control unit may cause said location information to be transmitted to said vendor. Said control circuit may receive and process directions to said vendor. Said control circuit may be responsive to a user selection of a vendor which provides said selected product to operate said transceiver to initiate a wireless communication with said selected vendor.

Said control circuit may operate said transceiver to send customer identification information to said vendor as part of said order information, to send payment information to said vendor as part of said order information, or to send order selections to said vendor as part of said order information.

Said control circuit may operate said display device to display a menu of available items received from a vendor, or to display an amount due for an order, which is received from a vendor.

Said control circuit may be operative to send a request for directions to said vendor facility. Said control circuit may be operative to indicate to a customer received directions to said vendor facility.

According to a further aspect of this invention there is provided a wireless apparatus at a vendor facility comprising:
a communications transceiver for wirelessly communicating with potential customers in the vicinity of said vendor facility who also have wireless communications devices; and
a control circuit coupled to said transceiver for causing said transceiver to attempt to establish a temporary wireless communications link with said potential customers and if a communications link is established for transmitting an order solicitation message to a potential customer over said established link.

Said control circuit may be located at a vendor facility containing said transceiver, or at a vendor facility remote from a location of said transceiver. Said control circuit may be connected to said transceiver through a network.

According to yet another aspect of this invention there is provided a method for processing customer orders at a vendor transaction facility comprising:
establishing a temporary wireless communication at said vendor transaction facility with a mobile customer;
receiving a wireless order from said customer; and
processing said order to fulfillment at a customer accessed vendor fufillment station.

The method may comprise receiving and processing a plurality of orders from a plurality of mobile customers and displaying at said vendor facility the locations of said plurality of customers. The method may comprise arranging the orders from said plurality of customers in a displayable queue at said vendor facility. Said queue may be a first-in first-out queue. Said queue may be based on customer distance from said fulfillment station, time to order fulfillment, or an assigned customer priority.

The method may comprise transmitting menu items to said mobile customer.

The method may comprise transmitting promotional specials to said mobile customers.

The method may comprise monitoring the status of a customer order at an agent station. The method may comprise adjusting an entered order at said agent station.

The method may comprise initiating said wireless communication whenever a mobile customer is within a predetermined distance of a predetermined location.

The method may comprise transmitting directions to said fulfillment station to said mobile customer. Said directions may be transmitted in response to a receipt of a request for directions from a mobile customer.

The method may comprise examining a profile for said mobile customer and using information in said profile during the processing of said order. Said customer profile may contain a list of said mobile customer's favorite items for ordering, said method further comprising sending said favorites list to said mobile customer.

The method may comprise receiving and storing information about said customer in a customer data base.

Said fulfillment station may be a drive-through window.

According to a yet further aspect of this invention there is provided a device as claimed in claim 6.

The method may comprise displaying at said wireless customer communications device directions to said vendor facility

The method may comprise displaying a menu of items available at said vendor facility at said wireless customer communications device.

The invention seeks to mitigate some of the problems associated with conventional customer/vendor transactions, for example, as may occur at a drive-through window of a fast food restaurant or other customer point of sale delivery location. The invention employs a wireless communication link which is temporarily established between a customer and a vendor transaction facility, e.g., a fast food restaurant, which enables order processing before a customer even arrives at the vendor transaction facility. The temporary wireless communication link which is established between the customer and vendor transaction facility permits the vendor to provide a menu of items or services for selection by the customer, customer selection of desired items or services, and payment transaction processing between the customer and vendor.. Since most of the operations associated with the purchase are completed before the customer actually reaches the vendor transaction facility, the only remaining operation is order fulfillment.

The invention permits better communications between the customer and vendor, cuts down the time required for customers to wait in line for order taking and fulfillment, provides customized services and permits the vendor to easily change menu items and present promotional specials to a customer.

These and other features and advantages of the invention will be more readily understood from the following detailed description which is provided in connection with the accompanying drawings.

### BRIEF DESCRIPTION OF THE DRAWINGS

FIGURE 1 is a in block diagram of a wireless vendor transaction facility in accordance with a first exemplary embodiment of the invention;
FIGURE 2 is a in block diagram of a wireless vendor transaction facility in accordance with a second exemplary embodiment of the invention;
FIGURE 3 is an illustration of a display image produced by the apparatus illustrated in Figures 1 and 2;
FIGURE 4 is a block diagram of a system which interconnects a plurality of vendor transaction facilities;
FIGURE 5 is a flow chart of the processing performed at the wireless personal communications device illustrated in Figures 1 and 2;
FIGURE 6 is a flow chart of the processing performed at the vendor transaction facility illustrated in Figure 1;
FIGURE 7 is a modification of a portion of the flow chart of Figure 6 which is used at the vendor transaction facility illustrated in Figure 2; and
FIGURE 8 is a block diagram of a personal wireless communications device illustrated in Figures 1 and 2.
FIGURE 9 is a flow chart of additional processing which may be performed at a vendor transaction facility; and
FIGURE 10 is a drawing of a representative display queue which may be used at a vendor transaction facility.

### DETAILED DESCRIPTION OF THE INVENTION

The present invention provides a wireless communication system for ordering from a vendor transaction facility, for example, a fast food restaurant having a drive-through window. The ordering is over a temporary wireless communication established between a mobile wireless device associated with a customer and a fixed wireless device provided at a vendor transaction facility. Although the invention will be described below using a drive-through restaurant as an exemplary embodiment, this is but one of many applications for the invention. The invention may be used and adapted to any type of customer interaction with a vendor transaction facility, for example, a video store, drug store, or other type of store or service provider facility

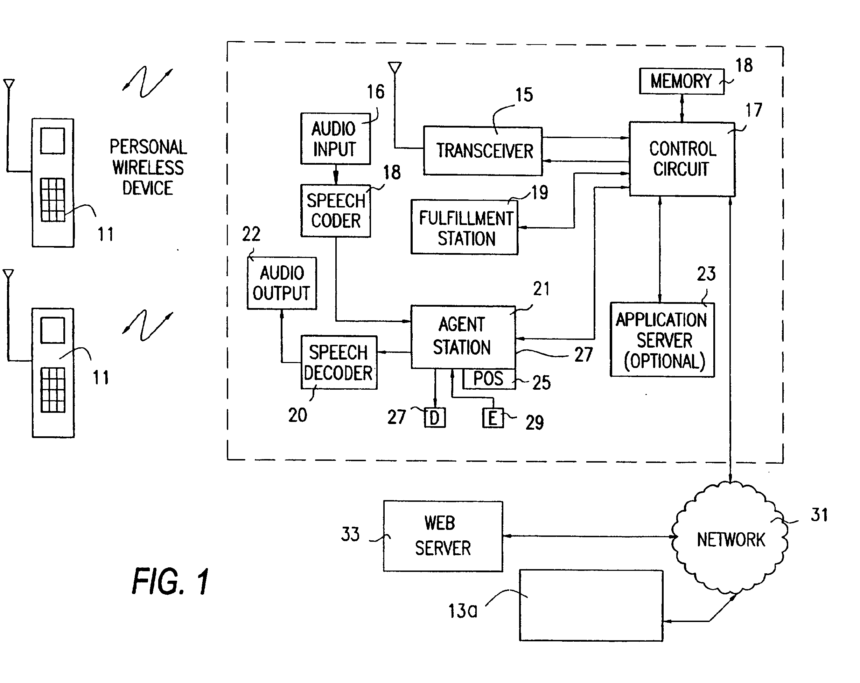

Figure 1 illustrates a first embodiment of the invention. The mobile wireless device is illustrated in Figure 1 as a personal wireless device 11, two such devices being shown in Figure 1. Personal wireless device 11 may include a personal digital assistant, wireless laptop computer, wireless telephone or other personal wireless device having a transceiver for sending and receiving messages. Preferably, personal wireless device 11 has a transceiver which is Bluetooth™, compliant as is a transceiver 15 provided at the vendor transaction facility 13. A Bluetooth™ compliant transceiver is capable of establishing a communication path in a process called bonding to one or more other Bluetooth™ compliant transceivers, as set out in the well-known Bluetooth™ protocol.

The vendor transaction facility 13 is illustrated as including transceiver 15, a control circuit 17, memory 18, a fulfillment station 19, for example, an order delivery station where a customer can pick up an order, an agent station 21 which may be associated with a point-of-sale station 25, a display device 27, and an input device 29 The vendor transaction facility 13 may also include an application server 23 as an option. The vendor transaction facility 13 may also be connected by a network 31 which may be a LAN, WAN wireless network, or Internet, etc., to a corporate server 33 for purposes for monitoring transactions and inventory administration. For purposes of, simplifying further discussion, network 31 will be assumed to be the Internet and server 33 a corporate web server which is connected to the vendor transaction facility through the Internet. The vendor transaction facility may also be connected by network 31 to another vendor transaction facility 13 a to enable the other transaction facility 13 a to handle all or part of a transaction, or order fulfillment, for a customer in communication with vendor facility 13, as will be more fully described below.

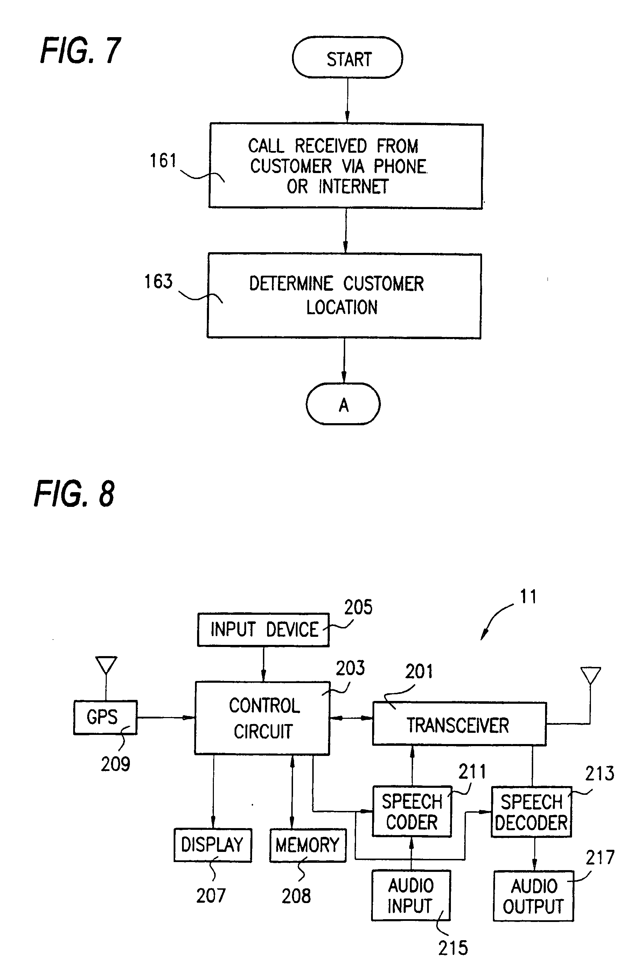

The construction of the personal wireless device 11 is illustrated in greater detail in Figure 8. It includes a transceiver 201, a control circuit 203, memory 208, an input device 205, an optional GPS position detector 209, a display 207, an audio input device 215, an audio output device 217, a speech coder 211, and a speech decoder 213. It should be noted that the personal wireless device 11 may have other circuits as well to enable its usual functionality, for example, as a personal digital assistant, wireless telephone, wireless computer, etc. In addition, several of the elements illustrated in Figure 8, for example, control circuit 203, input device 205, display 207, transceiver 201, among others, may also be used by the personal wireless device 11 in providing its usual functionality.

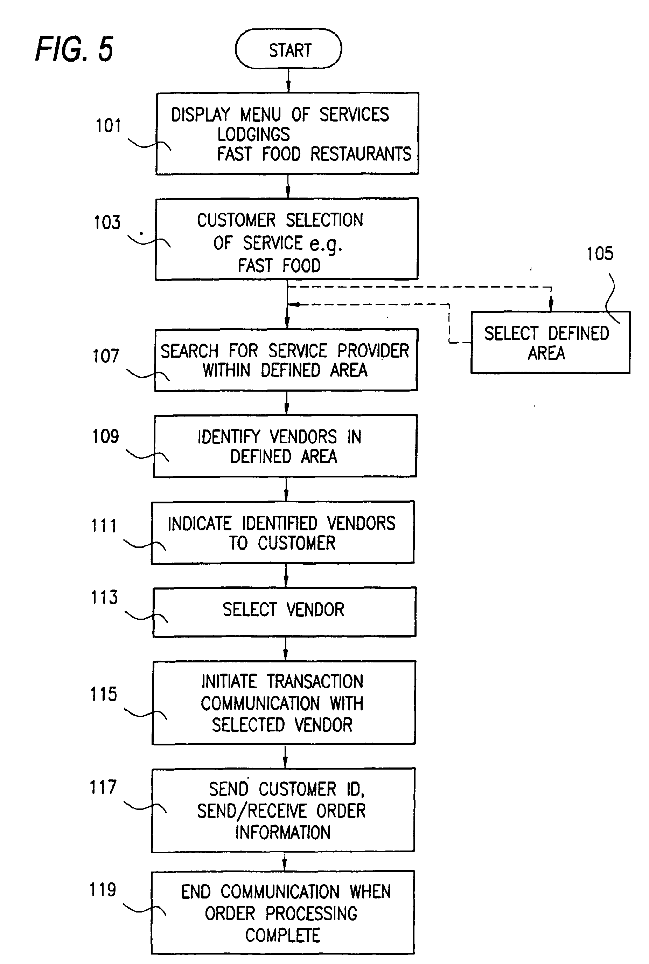

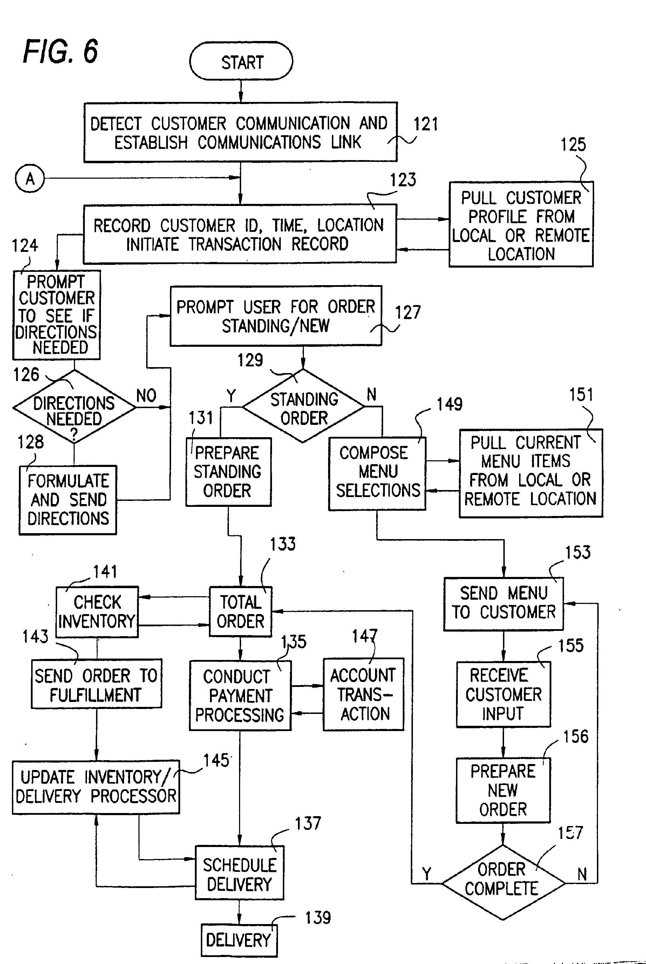

The operation of the embodiment illustrated in Figure 1 will now be described with reference to the flow charts on Figures 5 and 6 which respectively illustrate the operation of a personal wireless device 11 and the vendor transaction facility 13, respectively. Turning first to the operation of the personal wireless device 11 in Figure 5, when first enabled for ordering, a display is presented to a user of the various goods and/or services which may be selected. For example, the control circuit 203 may consult and operate display 207 to display available types of products or services such as lodging, fast food, video stores, etc. From display of types of products or services which occurs at processing segment 101, a customer can view on display 207 and select in processing segment 103, one of the listed types of products/services. For example, the customer may select fast food restaurants from the list as displayed in processing segment 101.

The control circuit 203, in response to selection of a particular product/service by a user, next determines what vendor facilities are within the immediate area of the personal wireless device 11. In the example of fast food restaurant in processing signal 101 as a selection, a list of all fast food restaurants within the immediate vicinity of the second wireless device 11 is displayed. There are several methodologies by which the location of personal wireless device 11 can be determined. As illustrated in Figure 8, the personal communications device 11 may be configured with a GPS receiver 209 which determines the position of the wireless communications device 11. From this, control circuit 203 may consult a pre-stored look-up table in memory 208 to determine which fast food restaurants are located within a predetermined vicinity, e.g., a few miles, of the wireless communications device 11.

Alternatively, control circuit 203 may cause display device 207 to display a series of regional maps from which a user can select a defined area in which the user is currently located. This is illustrated in processing segment 105 of Figure 5. Other methods may also be used to determine an area in which a user is located, and to thereby consult memory 208 to determine which fast food restaurants are within that area.

Referring again to Figure 5, after control circuit 203 searches for and identifies vendors in the area in which the personal communications device 11 is located, these vendors are then indicated to a user of the communications device 11, either by way of visual display 207 or by way of an audio output 217.

After a user receives an indication of available vendors for the selected type of product/service, the user then operates a keypad or other selection device, e.g., touch screen, mouse, audio or speech command, etc., at the personal communications device 11 to select a vendor, as illustrated in processing segment 113.

Once the control circuit 203 receives this selection, it initiates communications with a selected vendor in processing segment 115 by operating transceiver 201 to cause a temporary wireless connection to be established with a vendor transaction facility 13. The communication may be, as noted, through a Bluetooth™ compliant communications channel. The procedures for establishing Bluetooth™ wireless links are well known in the art and are defined in the Bluetooth™ specification and will not be described in detail herein. Other open standard or proprietary wireless communications protocols may also be used to establish a wireless communication channel between a personal communications device 11 and a vendor transaction facility 13 transceiver 15.

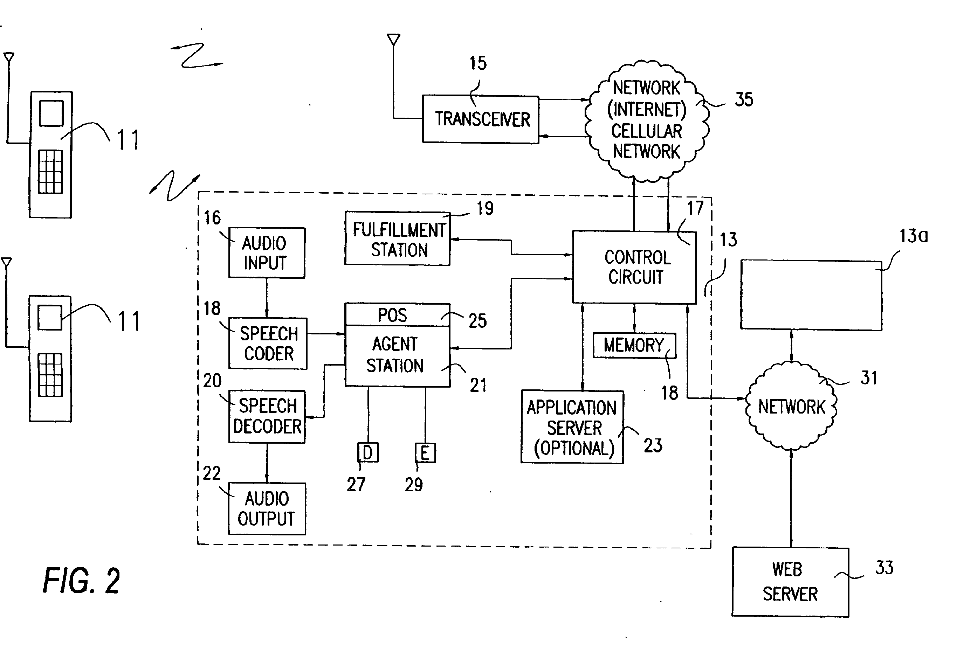

In addition, as shown below in connection with Figure 2, it is also possible for the customer device 11 to be a cellular phone, digital message service device or web based communications device in which case communications between the device 11 and transceiver 15 can be over a cellular, PCS, digital message, or other communications path which connects to a network 35. In this case the network operator can provide a provisioning service in which a service and/or configuration of a service can be established for an individual, class of customers, users, etc., where the customer or provisioning agent of the network operator selects the contents of the service to be provided to an individual or class of customers. For example, a cellular or web based customer can view a list of fast food restaurants on a web page provided by the network operator (or listen to audio prompts) and can indicate which fast food restaurants should be included in his or her menu of services to appear (or be heard) on his or her mobile web device (cell phone) when the customer connects to a predetermined address. These selections can be changed, modified or deleted. After passing through the network 35, the customer connects with a particular vendor transaction facility.

Returning to Figure 5, once the communication channel is established between a customer and a vendor transaction facility 13 (Figure 1) either directly or through a network provider (Figure 2), the personal communications device 11 sends customer identification, location information and also sends and receives order information to and from a wireless link at the vendor transaction facility 13. When the order process is completed, the communication channel between the personal communications device 11 and vendor facility 13 is terminated, as indicated in processing segment 119.

The information which is exchanged during processing segment 117, such as customer ID and other order and payment information, will be described in greater detail with reference to the processing carried out at the vendor transaction facility 13, as illustrated in Figure 6.

Referring to Figure 6, which shows a flow chart of the operations performed at the vendor transaction facility 13 by the control circuit 17, at an initial processing step 121, the control circuit 17 monitors transceiver 15 to see if a customer communication has been detected. That is, control circuit 17 checks if a personal wireless device 11 is trying to establish a wireless communications channel with the vendor transaction facility 13. If so, the control circuit 17 instructs the transceiver 15 to establish a communications channel with the personal wireless device 11.

In processing segment 123, control circuit 17 next records a received customer identification, customer location, the time of the transaction, the location of the vendor transaction facility 13, and initiates a record of the transaction. In association with this, the control circuit 17 may also pull a customer profile from a database for a customer who is a returning customer. This profile may be stored in memory 18, or may be pulled from of a corporate web server 33 via the Internet network 31. Alternatively, the customer profile can be pulled from an application server 23 which is optionally provided at the vendor facility 13. For a new customer, the control circuit 17 may initiate and store a new customer profile. The customer profile may also be stored in memory at the customer's personal wireless device 11 in which case it is transmitted from device 11 to the vendor transaction facility 13, along with the other customer information. Control circuit 17 receives the profile, updates it as necessary during a transaction, and transmits the updated profile back to the customer device 11 for storage.

The control circuit 17 may also prompt a customer in processing segment 124 to see if the customer needs directions to the vendor transaction facility 13. If the customer sends a response indicating that directions are needed, as detected in processing segment 126, control circuit 17 formulates such directions and sends them to the customer device 11 in processing segment 128. The directions can be sent as a general fixed set of directions to the vendor facility, or may be specifically tailored based on the received customer location information and the known location of the vendor transaction facility 13.

The customer identification information can be used by control circuit 17 to begin building a customer profile for new customers and can also enter and use the information in customer priority and customer loyalty databases.

If a customer profile is available, it may indicate that the customer has a standing order, that is, an order which the customer usually places. If so, the control circuit 17 operates transceiver 15 to send a prompt to the customer requesting whether or not the customer wants to order per the standing order or wants to place a new order in processing segment 127. If there is no existing customer profile, the control circuit 17, merely prompts the customer for a new order in processing segment 127. The customer profile may also indicate the importance of the customer to the vendor which may be used to establish an order or fulfillment priority when several customers are accessing a vendor transaction facility, or to provide special promotional deals for the customer.

Referring again to Figure 6, the customer profile may also indicate a favorites list of items which can be sent to a customer when a customer chooses to place a new order.

The control circuit 17 checks transceiver 15 for a response from the customer in processing segment 129, which response will indicate whether a standing order or a new order is to be placed. As noted, customer may enter any information required during the ordering process by keyboard, mouse, touch screen, audio command, or any other type of information input device. If the customer response indicates that a standing order is to be placed, control circuit 17 moves from processing segment 129 to processing segment 131, where a standing order is prepared. The standing order is then totaled and the amount due for the order is sent to the customer in processing segment 133, and a processing payment routine is executed by control circuit 17 in processing segment 135. This entails receiving payment information from the customer in response to the amount due information which was sent in processing segment 133. Payment may be in the form of a credit card, debit card, prepaid card or other account information which is received from the customer in processing segment 135, and which is executed by an account transaction module shown as processing segment 147. This account information may be entered by a customer at the personal communications device 11, or it may be pre-stored at the personal communications device 11 and sent by customer command upon receipt of an amount due from the vendor transaction facility or it may be stored in the network, e.g., at server 33 or in memory 18 of a vendor transaction facility, or at optional server 23. Account authorization can be conducted over a secure financial link between a customer device 11 and a vendor transaction facility 13 and between the vendor transaction facility 13 and an authorizing authority.

Once payment transactions have been completed, control circuit 17 moves to a schedule delivery processing segment 137 which sets the order for delivery and instructs delivery in processing segment 139. For a fast food restaurant, for example, processing segments 137 and 139 will result in the order being made available for customer delivery at a fulfillment station 19 (Figure 1, e.g., at a drive-in window).

Referring back to processing segment 133 in Figure 6, as an adjunct to totaling an order, the control circuit 17 also performs an inventory check in processing segment 141. The customer order will only be totaled if sufficient inventory exists for processing the order. If insufficient inventory exists to process the order, that will be indicated to the customer as part of the total order processing segment 133.

Assuming that the inventory is sufficient to fulfill the order, control circuit 17 then sends the order to the fulfillment station 19 in processing segment 143, after which the inventory and delivery processor associated with the vendor transaction facility 13 is updated at processing segment 145. The inventory/delivery processor may be the optional application server 23 at the vendor transaction facility, or may reside as the web server 33, connected to control circuit 17 through the Internet 31. The inventory and delivery processor may also be the control circuit 17 itself.

Referring again for a moment to processing segment 137 of Figure 6, order delivery is scheduled after the order has been sent to fulfillment and proper payment processing has occurred in processing segment 135. Once these events have both been completed, then an order is set for delivery at processing segment 139 at the fulfillment station 19.

Referring back to processing segment 129, if a standing order is not selected by a customer, meaning that a new order will be taken, the control circuit 17 composes a menu of item selections in processing segment 149. In conjunction with this, it may pull current menu items from a local or remote location in processing segment 151. Once again, these menu items may reside on an optional application server 23 provided at the vendor facility 13, or on a web server 33 connected to control circuit 17 by the Internet 31, or may be provided in memory 18 associated with control circuit 17. In addition, control circuit 17 can pull a list of favorite items from the customer profile which are items which the customer typically selects when placing an order.

Once the menu selections have been composed in processing segment 149 they are sent by the control circuit through transceiver 15 in processing segment 153 to the customer. The control circuit 17 then awaits a customer input which, when received from transceiver 15, is used to prepare an order in processing segment 156 As noted, customer selection input may be by any convenient entry device such as a keyboard, mouse selection, touch screen, audio command, etc. The customer may also input an order complete indication when no further selections are desired. In processing segment 157, control circuit 17 analyzes a customer input selection and determines whether ordering is complete and, if so, proceeds to processing segment 133 where the order is totaled, and all other operations described above which follow the order totaling at processing segment 133 are executed.

If the order is determined to not be complete in processing segment 157, the control circuit 17 processes the customer's order selection and returns to processing segment 153, where it again sends the menu to a customer; receives a customer order selection or order complete indication in processing segment 155; updates the order in processing segment 156 if an order selection was entered by a customer; and again checks to see if the order is complete in processing segment 157. This process repeats until the customer indicates that the order is complete, as detected at processing segment 157.

Once the order is determined to be complete in processing segment 157, the control circuit 17 proceeds to the total order processing segment 133, and processing proceeds as described above with respect to all processing segments which follow the total order processing segment 133.

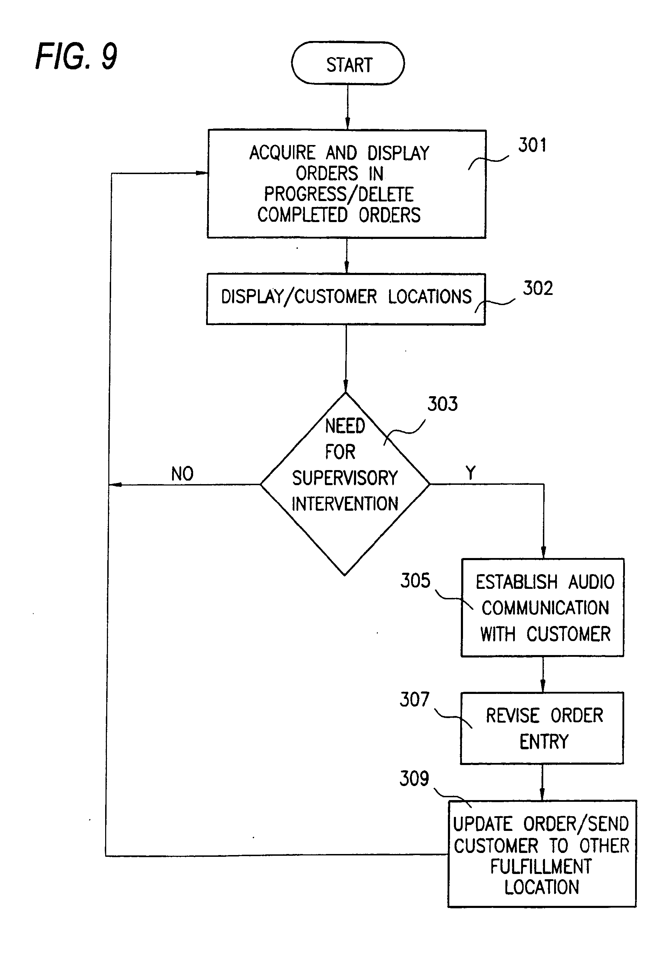

Figure 1 also illustrates an agent station 21 which may include a point-of-sale terminal 25, as well as a display 27 and an input device 29. The agent station 21 provides a supervisory function for the order processing described above with respect to Figures 5 and 6. As such, the agent station 21 may have its own control circuit or may operate off the control circuit 17 of the vendor transaction facility 13. In either event, the functions executed by the agent station 21 are illustrated by the flow chart depicted in Figure 9.

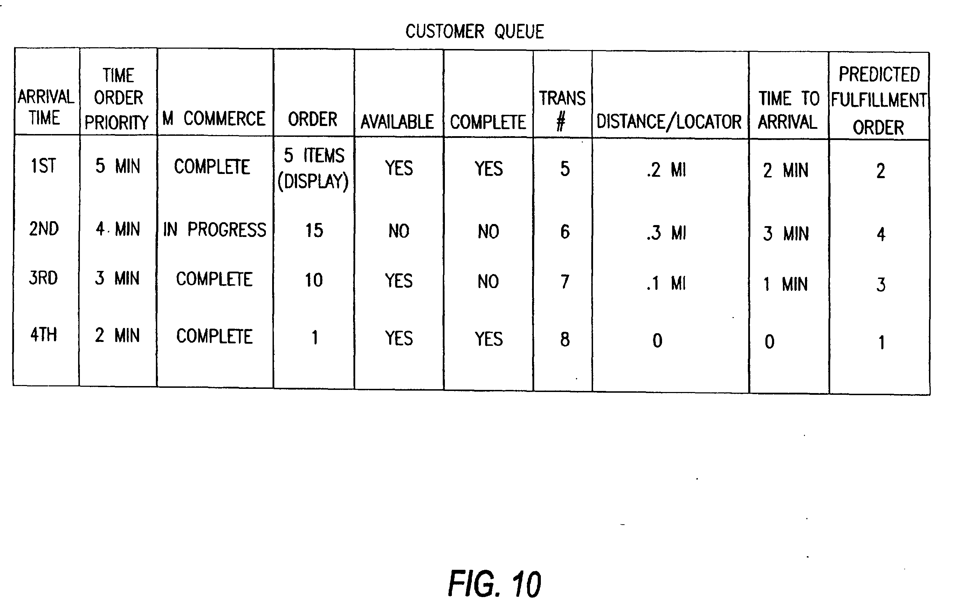

The agent station 21 acquires and displays all orders currently in progress from all wireless customers. It also deletes any completed orders from the display in processing segment 301. For example, customers may be arranged by the control circuit for the agent station 21 in a customer queue, such as first-in-first-out (FIFO) queue as shown in Figure 10. This queue may be maintained by the control circuit 17 or by a control circuit provided at the agent station 21, or even by application server 23. In any event, the agent station 21 has access to the stored information shown in Figure 10.

As illustrated, the information which is displayed by agent station 21 on display device 27 includes the arrival time of each customer, that is the time the communication was initiated between the customer and the vendor transaction facility 13, an indication of whether or the payment and inventory aspects of the transaction have been completed (the M Commerce column), an indication of the number of the order, including number of items and what they are, an indication of whether those items are available, an indication of whether or not the order has been completed, an indication of the transaction number, an indication of the distance or location of the customer from the vendor transaction facility 13, an estimate of the time of arrival, and a prediction of which customers will be processed in what order. Thus an agent at the agent station 21 is able to completely view all pending orders and their status for possible problems and consequent intervention and fulfillment can be organized and monitored.

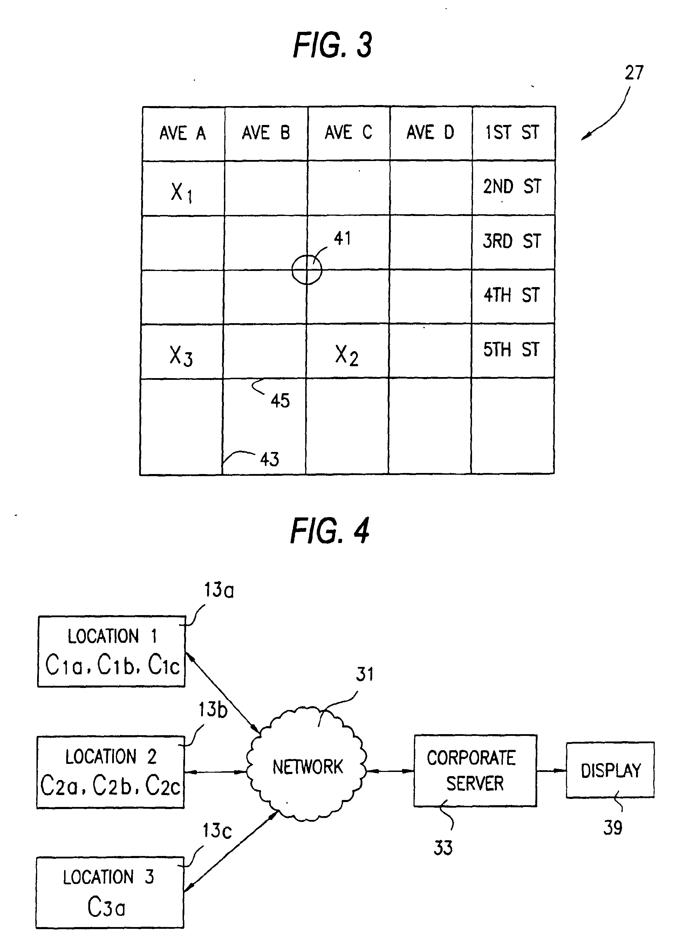

Referring back to Figure 9, in addition to the display of the orders which are being processed for all customers, the agent station may also display, in processing segment 302, customers locations relative to the vendor transaction facility 13, for example, as shown in Figure 3.

Figure 3 shows the location 41 of the vendor transaction facility 13 overlayed on a street map, including streets 43 and 45 and, in addition, shows the locations of the customers, here illustrated as customers X₁, X₂ and X₃. Thus an agent at agent station 21 not only sees the status of all orders in progress, but also sees the relative locations of the customers to the vendor transaction facility 13. One or both of the displays illustrated in Figure 10 and Figure 3 can also be provided with an input selection device so that a transaction agent can select a particular customer for communications therewith.

Referring back to Figure 9, the agent station 21, or control circuit 17, may be provided with indication circuitry to indicate a problem in the order. For example, as illustrated in Figure 10, if the time that the order has been pending exceeds a predetermined time period, that customer order would be flashed on the display screen 27 at the agent station 21. Other conditions for triggering an alarm might include: unavailability of all items selected by a customer, customer arrival at vendor facility before the order has been completed, and other alarm indications. An agent can respond to these indications by selecting a customer for communication.

Thus, returning to Figure 9, if an alarm condition is indicated as requiring supervisory intervention as detected at step 303, an agent may make an entry on input device 29 and establish an audio communication with a selected customer, as illustrated in processing segment 305. As a result of that communication, a supervisor personnel may revise an order entry 307 including changing an item ordered, or perhaps even deleting an order, which is then sent to update order processing segment 309. This in turn serves to update the orders which were prepared in either processing segment 131 or processing segment 156.

It should be noted that other alarm conditions may also be flagged for the attention of the supervisor in processing segment 303. One such alarm indication might be that the system which is receiving information from the customer cannot decipher the customer's input. In such case, once again, an alarm flag will be indicated on the display 27 by, for example, a flashing customer input which will alert a supervisor for the need to establish an audio communication with a customer to clarify the order Another possible alarm condition might be that the vendor transaction facility 13 cannot fulfill the order or that order fulfillment will take too long, in which case a supervisor at agent station 21 can communicate that information to a customer and either direct the customer and order to another fulfillment station, or provide the customer with an anticipated time when fulfillment can be completed.

The agent station 21 communication, as established in processing segment 305, is conducted through control circuit 17 operating transceiver 15 to enable an audio communication between a personal wireless device 11 and the agent station 21. The audio communications at the personal wireless device 11 are conducted through the audio input 215 and output 217 circuits and associated speech coder 211 and decoder 213. Similar audio elements including input circuit 16, audio output circuit 22, speech coder 18, and speech decoder 20 are provided at the vendor transaction facility in association with the agent station 21.

Order taking and processing also need not occur exclusively at the vendor transaction facility which is in wireless communication with a customer, but may occur at any vendor transaction facility which is connected to network 31. Thus, if an equipment problem occurs at the vendor transaction facility 13 which is in wireless communication with a customer, responsibility for taking and completing the order can be passed onto another vendor transaction facility through network 31.

The agent station 21 at one facility 13a may also be used to monitor orders at a different vendor transaction facility 13 by communications with the different transaction facility over network 31. For example, if a customer operating a personal wireless device 11, which is in wireless communication with a first vendor transaction facility 13, is not fluent in English, making communications difficult, an operator at agent station 21 of the facility 13 which is in wireless communication with the customer can transfer responsibility for supervising and processing the transaction to a different facility 13a and associated agent station 21 where an operator may be fluent in the customer's native language. This occurs by an agent requesting control circuit 17 by input at agent station 21 to pass the order and transaction information associated with the customer to the other vendor transaction facility 13a through network 31 It is also possible for a control circuit 17 to pass the order and transactional information to another vendor transaction facility 13a automatically if a customer profile, or the content of an order, or a particular implementation indicates that another vendor transaction facility 13a is better able to process the order.

Thus, an order originating at one vendor transaction facility 13 can be supervised and processed by any other vendor transaction facility 13a coupled to network 13. Once the order is processed to completion, fulfillment occurs at the vendor transaction facility which is in wireless communication via transceiver 15 with the customer. This way, an order can be processed by any of the vendor transaction facilities with fulfillment occurring at that particular facility which is in wireless communication with the customer. This operation is transparent to the customer.

Although the invention has been primarily described with relation to using a personal wireless device 11 which establishes a direct wireless link to a transceiver 15 located at a vendor transaction facility 13, the invention may also be used with a conventional cellular, PCS, digital message or web based cellular network. This is illustrated in the Figure 2 embodiment of the invention.

Figure 2 differs from Figure 1 in illustrating a network 35 in between a transceiver 15 and a control circuit 17. Network 35, for example, may be a conventional cellular network or a cellular network and/or Internet network. In this embodiment, the personal wireless devices are cell phones or web based wireless communications devices. In this instance, the transceiver 15 is provided by a network operator, for example, a cellular operator; and the initial connection is established in conventional fashion. For example, for a cellular telephone, a customer would dial up a number of the vendor transaction facility 13. This customer and order information would be received by transceiver 15 which in this instance would be a cellular base station, which would make a connection to the vendor transaction facility 13 through a cellular network 35 or even through an Internet connection. In this manner, the customer may place an order using the cellular phone or web based communications device. If the customer has a web based wireless communications device, the transceiver 15 would again be provided by the network operator, and it would in turn be connected into a network 35 which, in this case, would be the Internet to the vendor transaction facility 13. All other aspects of the second embodiment of the invention operate the same as described above with respect to the first embodiment.

Figure 7 illustrates changes to the vendor transaction facility 13 software when a cell phone or web based communicator is used by a customer. Thus, referring to Figure 7, when an incoming call is received at a vendor transaction facility 13 as detected by the control circuit 17 of Figure 2, the control circuit then proceeds to determine customer identification and location at processing segment 163. Location information can be acquired by a customer keying in his location on the cellular telephone or other web based communicator, or, if that device includes a GPS receiver, GPS coordinate information can be sent manually or automatically by the customer to the vendor transaction facility 13. Once customer location information is received at processing segment 163, then processing proceeds in the manner illustrated in Figure 6 beginning at processing segment 123.

When a cellular or web based system as illustrated in Figure 2 is used, it is possible for the network operator, e.g., a cellular operator, or even an ISP for the Internet, to provision the customer's communication before sending it to the vendor transaction facility 13. Thus, the network operator or ISP may have stored information associated with the customer, such as preferred vendors or ordering information, customer priority information, etc., so the customer only needs to dial one phone number to the network operator or ISP to initiate an order and the cellular operator or ISP can retrieve stored vendor or other order preferences for the customer and direct the communication to a preselected vendor transaction facility 13.

Figure 4 illustrates how a plurality of vendor transaction facilities 13a. . . 13c can be connected through a network 31 to a corporate server 33 and in turn a display 39. Thus, referring back to the embodiments of Figure 1 and Figure 2, network 31 of Figure 4 corresponds to the same numbered networks in these figures.

The corporate server 33 can receive information about the customer orders at the various locations, e.g., information C1a, C1b, C1c, for customer transactions occurring at vendor transaction facility 13a, information C2a, C2b, C2c, for customer transactions occurring at vendor transaction facility 13b, and information C3a for customer transactions occurring at vendor transaction facility 13c. The corporate server 33 can in turn use the information on customer orders for inventory management, accounting, marketing and other corporate back room functions.

It should be noted that although the invention has been described in Figure 10 with respect to a customer ordering queue which is based on a first-in-first-out basis, the queue can also be arranged in the invention in other queue ordering, such as time to fulfillment, customer distance from fulfillment station, preferred customer, or other order priority sequence. In addition, as noted, the invention has been primarily described in the embodiment of Figure 1 with reference to using a Bluetooth™ compliant communications link or a wireless LAN IEEE 802.11 compliant communications link. However, as noted, other types of communications links may also be employed based on proprietary or standardized technology, for example, PICO, GSM, UMTS GSM as well as others.

In addition, when the vendor transaction facility 13 communicates menu selections and other order information to a customer from a vendor transaction facility 13, the facility may also transmit current promotional specials to the customer for review and possible selection. In addition, although a speech recognition unit and a speech synthesis unit have been described with respect to the embodiments above, it should also be appreciated that other types of communications units can be used to provide communications between the customer and the vendor transaction facility, such as beeps, vibrations, flashing lights, etc.

In addition, although customer payment has been described in terms of conventional payment mechanisms, such as credit card, debit card, prepaid account, etc., it is also possible to charge a customer's network account, e.g., Internet account, telephone account, a phone card, SIM card or other type of account for a transaction.

In yet another variant of the invention, it is also possible to provide the vendor transaction facility 13, and specifically the control circuit 17 thereat, with the ability to continually broadcast via transceiver 15 to possible personal wireless devices 11 which may be in the vicinity of transceiver 15 to initiate and establish a communications link therewith. In such instances, the control circuit 17 can be configured to provide menu selections, promotional specials and other information in an attempt to entice a customer to engage in placing an order. If a customer responds to a solicitation, ordering can proceed as discussed above with reference to Figures 5 and 6.

Although the invention has been primarily described with respect to the delivery of goods to a customer, the invention can also be used for the delivery of services as well. For example, the invention could be used to order car washes, dry cleaning, hair cuts, or any type of service which can be fulfilled at a fulfillment station or, in the case of dry cleaning, can be dropped off at a fulfillment station.

The control circuits 17 and 203 may be formed of computer circuits, such as stand alone computers and processors, with associated memory, or may be formed as other programmable or hard-wired logic devices, or a combination of hardware devices and programmable devices. In addition, one or more or all of the functions performed by the control circuit 17 can be performed by a local 23 or remote 33 server, which servers can also function as the control circuits, or the functions performed by control circuit 17 can be distributed and shared among control circuit 17, local 23 and remote 33 server, in which case the control circuit 17, local 23 and remote 33 servers function as a seamless control circuit.

Still further, it is also possible with any of the exemplary embodiments to have all transaction processing for a customer handled by a remote server, e.g., with server 33 with the control circuit 17 primarily functioning to relay order information between a personal wireless device 11 and the web server 33, and instructing the order fulfillment station 19 to fulfill an order under instruction of web server 33.

The invention also permits system structuring so that different functions on the vendor side can be performed by different parts of the system, for example, two or more transaction facilities 13, 13a can perform different aspects of an order, and the remote 33 and local 23 (if provided) servers can handle parts of the order processing as well. Accordingly, ordering, fulfillment and agent operations can each be easily and independently optimized.

While various embodiments of the invention have been described and illustrated above, it should be noted that many modifications, substitutions and variations can be made without departing from the spirit and scope of the invention. Accordingly, the invention is only limited by the scope of the claims appended hereto.

## Claims

1. A wireless device for processing customer orders comprising;
a communications transceiver (15) for wirelessly communicating with a mobile customer **CHARACTERIZED BY:**
a control circuit (17) coupled to said transceiver and adapted to control said transceiver to:
establish a communication link with a mobile customer;
record a time of transaction, customer location and vendor location;
receive a wireless order from said customer; and
wirelessly receive a payment and then process the payment from said customer associated with said order,
wherein said establishing, reception and processing steps are completed before a time period, derived from said recorded information, has elapsed.

2. A device as in claim 1 further comprising a display device (27), said control circuit causing said display device to indicate the locations of the customer communicating with said transceiver, a time of arrival estimate and a customer distance.

3. A device as in claim 1 wherein said control circuit communicates order information associated with the order to an inventory control system.

4. A device as in claim 1 wherein said wireless communication link is a LAN IEEE 802.11 compliant communication link.

5. A device as in claim 1 wherein said control circuit causes said transceiver to transmit promotional specials to the wireless customer.

6. A wireless customer communications device **CHARACTERIZED BY:**
a control circuit (203) adapted to:
establish a wireless communications link with a vendor transaction facility;
record a time of transaction, customer location and vendor location;
wirelessly exchange order information with said vendor transaction facility; and
wirelessly forward payment information to the facility,
wherein said establishing, exchanging and forwarding steps are completed before a time period, derived from said recorded information, has elapsed.

7. A device as in claim 6 wherein the control circuit is further operable to:
determine vendors which are within a predetermined range of a location of said device; and
establish said wireless communications link with one of said vendors.

8. A device as in claim 6 further comprising:
a display (207) operable to display a list of available vendors, a time of arrival estimate and a customer distance.

9. A device as in claim 6 wherein said device is further operable to transmit the location to said vendor facility.

10. A device as in claim 6 wherein said vendor facility includes a drive-through fulfillment station.

## Patentansprüche

1. Drahtlose Einrichtung zum Bearbeiten von Kundenaufträgen, umfassend:
einen Kommunikationssender/-empfänger (15) zum drahtlosen Kommunizieren mit einem Mobilkunden, **gekennzeichnet durch**:
eine Steuerschaltung (17), die an den Sender/Empfänger angekoppelt und so ausgelegt ist, daß sie den Sender/Empfänger so steuert, daß folgendes ausgeführt wird:
Herstellen einer Kommunikationsverbindung mit einem Mobilkunden;
Aufzeichnen einer Transaktionszeit, eines Kundenorts und eines Händlerorts;
Empfangen eines drahtlosen Auftrags von dem Kunden; und
drahtloses Empfangen einer Bezahlung und dann Bearbeiten der Bezahlung von dem Kunden in Assoziation mit dem Auftrag,
wobei die Schritte des Herstellens, des Empfangs und des Bearbeitens abgeschlossen werden, bevor ein aus den aufgezeichneten Informationen abgeleiteter Zeitraum abgelaufen ist.

2. Einrichtung nach Anspruch 1, ferner mit einer Anzeigeeinrichtung (27), wobei die Steuerschaltung bewirkt, daß die Anzeigeeinrichtung die Orte des mit dem Sender/Empfänger kommunizierenden Kunden, eine Ankunftszeitschätzung und eine Kundendistanz anzeigt.

3. Einrichtung nach Anspruch 1, wobei die Steuerschaltung mit dem Auftrag assoziierte Auftragsinformationen zu einem Bestandsführungssystem übermittelt.

4. Einrichtung nach Anspruch 1, wobei die drahtlose Kommunikationsverbindung eine Kommunikationsverbindung gemäß LAN IEEE 802.11 ist.

5. Einrichtung nach Anspruch 1, wobei die Steuerschaltung bewirkt, daß der Sender/Empfänger Sonderangebote zu dem drahtlosen Kunden sendet.

6. Drahtlose Kunden-Kommunikationseinrichtung, **gekennzeichnet durch**:
eine Steuerschaltung (203), die für folgendes ausgelegt ist:
Herstellen einer drahtlosen Kommunikationsverbindung mit einer Händler-Transaktionsanlage;
Aufzeichnen einer Transaktionszeit, eines Kundenorts und eines Händlerorts;
drahtloses Austauschen von Auftragsinformationen mit der Händler-Transaktionsanlage; und
drahtloses Weiterleiten von Bezahlungsinformationen zu der Anlage,
wobei die Schritte des Herstellens, des Austauschens und des Weiterleitens abgeschlossen werden, bevor ein aus den aufgezeichneten Informationen abgeleiteter Zeitraum abgelaufen ist.

7. Einrichtung nach Anspruch 6, wobei die Steuerschaltung ferner für folgendes betreibbar ist:
Bestimmen von Händlern, die sich innerhalb einer vorbestimmten Entfernung eines Orts der Einrichtung befinden; und
Herstellen der drahtlosen Kommunikationsverbindung mit einem der Händler.

8. Einrichtung nach Anspruch 6, ferner umfassend:
eine Anzeige (207), die betreibbar ist, um eine Liste verfügbarer Händler, eine Ankunftszeitschätzung und eine Kundendistanz anzuzeigen.

9. Einrichtung nach Anspruch 6, wobei die Einrichtung ferner betreibbar ist, um den Ort zu der Händleranlage zu senden.

10. Einrichtung nach Anspruch 6, wobei die Händleranlage eine Durchfahr-Auftragserfüllungsstation enthält.

## Revendications

1. Dispositif sans fil pour traiter des commandes clients comprenant :
un émetteur-récepteur de communications (15) pour communiquer en mode sans fil avec un client mobile
**CARACTERISE PAR** :
un circuit de commande (17) couplé audit émetteur-récepteur et adapté pour commander ledit émetteur-récepteur afin :
d'établir une liaison de communication avec un client mobile ;
d'enregistrer une heure de transaction, une position de client et une position de fournisseur ;
de recevoir une commande sans fil dudit client ; et
de recevoir en mode sans fil un paiement puis traiter le paiement dudit client associé à ladite commande,
dans lequel lesdites étapes d'établissement, de réception et de traitement se terminent avant l'arrivée à terme d'une période de temps, dérivée desdites informations enregistrées.

2. Dispositif selon la revendication 1, comprenant en outre un dispositif d'affichage (27), ledit circuit de commande forçant ledit dispositif d'affichage à indiquer les positions du client qui communique avec ledit émetteur-récepteur, une estimation d'heure d'arrivée et une distance de client.

3. Dispositif selon la revendication 1, dans lequel ledit circuit de commande communique des informations de commande associées à la commande à un système de contrôle des stocks.

4. Dispositif selon la revendication 1, dans lequel ladite liaison de communication sans fil est une liaison de communication de norme LAN IEEE 802.11.

5. Dispositif selon la revendication 1, dans lequel ledit circuit de commande force ledit émetteur-récepteur à transmettre des offres promotionnelles spéciales au client sans fil.

6. Dispositif de communications de client sans fil
**CARACTERISE PAR** :
un circuit de commande (203) adapté pour :
établir une liaison de communication sans fil avec un centre transactionnel de fournisseur ;
enregistrer une heure de transaction, une position de client et une position de fournisseur ;
échanger en mode sans fil des informations de commande avec ledit centre transactionnel de fournisseur ; et
transmettre en mode sans fil des informations de paiement au centre,
dans lequel lesdites étapes d'établissement, d'échange et de transmission se terminent avant l'arrivée à terme d'une période de temps, dérivée desdites informations enregistrées.

7. Dispositif selon la revendication 6, dans lequel le circuit de commande est exploitable en outre pour :
déterminer des fournisseurs qui se trouvent à une distance déterminée d'une position dudit dispositif ; et
établir ladite liaison sans fil avec l'un desdits fournisseurs.

8. Dispositif selon la revendication 6, comprenant en outre :
un affichage (207) exploitable pour afficher une liste de fournisseurs possibles, une estimation d'heure d'arrivée et une distance de client.

9. Dispositif selon la revendication 6, dans lequel ledit dispositif est en outre exploitable pour transmettre la position audit centre de fournisseur.

10. Dispositif selon la revendication 6, dans lequel ledit centre de fournisseur comporte une station d'approvisionnement à service au volant.
